# EUROPEAN PATENT APPLICATION

(11) **EP 1 947 069 A1**
(43) Date of publication of application: **23.07.2008**
(21) Application number: 06812686.1
(22) Date of filing: 17.10.2006
(51) Int. Cl.: C04B 28/04, C04B 26/14, C04B 26/18

(54) **FORMULATION FOR OBTAINING A TRANSLUCENT CONCRETE MIXTURE**

(30) Priority: 17.10.2005 MX PA05011140
(71) Applicant: Concretos Translúcidos, S. de R.L. de C.V., C.P. 01020, México (MX)
(72) Inventor: GÁLVAN CÁZARES, Sergio Omar, C.P. 01020 México, D.F. (MX); SOSA GUTIÉRREZ, Joel, C.P. 01020 México, D.F. (MX)
(74) Representative: Ungria Lopez, Javier
(86) International application number: PCT/MX2006/000112
(87) International publication number: WO 2007/046683

(57) **Abstract**

The invention relates to a formulation for obtaining a translucent concrete mixture comprising a mixture of polycarbonate and epoxy matrices, as well as glass fibres, optical fibres, colloidal silica, silica and diethylentriamine (DETA) and Portland cement. The invention has greater mechanical strength properties than those of a standard concrete, with lower density and mechanical characteristics that enable same to be used in both a structural and architectonic manner. The inventive formulation used to obtain the translucent concrete mixture comprises a type of concrete that is different from those currently available, which combines the advantages of existing concretes with translucency.

## Description

### FIELD OF THE INVENTION

The present invention relates to the field of additives for concrete, which permit a concrete to be achieved having structural and architectural use with surprising optical properties. The additive forming the object of this invention comprises the incorporation in the concrete of a binder consisting of a polymeric matrix or binder, preferably two polymeric matrices, one an epoxy resin and the other a polycarbonate resin, each accompanied by its respective catalyst,

### PRIOR ART OF THE INVENTION

The concrete currently used in the construction industry generally consists of at least cement, water and aggregates (fine or coarse). As is well known, traditional concrete has a greyish colour, and its high density prevents the passage of light through it, which means that it is also impossible to distinguish bodies, colours and shapes through it.

As can be imagined, concrete with the characteristic of being translucent will permit a better interaction between the construction and its environment, thereby creating ambiences that are better and more naturally lit, at the same time as significantly reducing the expenses of laying and maintenance of the concrete.

With the aim of eliminating these and other drawbacks, thought has been given to the development of a translucent concrete, which is sought to be protected by means of this patent application, since it concerns a formulation of concrete which, as well as permitting the passage of light through it, also works more efficiently in the mechanical sense than traditional concrete.

### DESCRIPTION OF THE INVENTION

The invention forming the object of this specification relates to the formulation of a novel type of translucent concrete which, as well as permitting the passage of light through it, also works more efficiently in the mechanical sense than traditional concretes.

The characteristic details of this novel concrete are clearly shown in the following description and following the same reference signs for indicating it.

The matrix used in the formulation of this concrete was of the binder type, in order to give it the necessary rigidity, and it can be any polymeric matrix or binder, with two polymeric matrices preferably being used, one an epoxy and the other a polycarbonate, each accompanied by its respective catalyst, so that, when reacted chemically, the concrete is formed on setting.

The formulation also uses Portland type cement, preferably white, for the formulation of the inventive concrete.

The aggregates used in the manufacture and formulation were fibreglass, silica, colloidal silica sol and optical fibres. Optionally, rocky elements can be used as aggregates, for example, gravels, sands, etc.

The epoxy matrix or binder used for the formulation of this concrete is diglycidyl ether of bisphenol A (DGEBA) which is dehydrated in vacuo at 80° C for 8 hours prior to use. The epoxidic equivalent of the resin was determined by potentiometric methods.

The setting agent used is diethylenetriamine (DETA), which has to be dehydrated on molecular sieves prior to use.

A polycarbonate was chosen totally different from the polycarbonate of bisphenol A, which is produced starting from a monomer which, thanks to the fact that it has two aryl groups at its ends and these in turn contain carbon-carbon double bonds, can be polymerised by a vinyl polymerisation by means of free radicals. In this way, all the chains will join up one with another in order to form a cross-linked material.

Glass fibres were used without any kind of wetting, Mat, of cut thread, ground fibres deprived of wetting of lengths greater than 0.02 mm, with the function of improving the resistance of the concrete to compression, bending, tension and torsion.

The optical fibres used in the formulation of this concrete are basically fine glass or plastic threads that guide the light. The communication system arises from the union between the light sources that is sufficiently pure for not being altered. The types of fibres used are monomode and virgin fibres, in other words, those in the pure state and without any coatings, the aim of which is so that the light can pass through the concrete and can in turn be used as electrical conductors.

Used as additives are: pigments; antistatic agents for eliminating static electricity; bridging agents for favouring the attachment to the matrix, giving resistance and protection against aging; lubricant agents for giving surface protection and filmogenic gluing agents for giving integrity, rigidity, protection and impregnation, metal salts, thixotropic agents (flakes of inorganic materials, glass microspheres, calcium carbonates, silicon dioxide, etc.), flame retardant agents (elements containing chlorine, bromine, phosphorus, etc.) and UV protection agents (stabilisers).

Silica sol, also known as silica hydrosol, is a colloidal solution with a high molecular hydration of silica particles dispersed in water. It is odourless, tasteless and non-toxic. Its molecular chemical formula is mSiO2 nH2O. Its function is to act as a desiccant, binding agent, adhesive and dispersant.

Silica of between 0.5 and 10% by weight of resin has to be used so that, once set, the silica used provides greater resistance and hardness to the concrete.

The processing will be done under a flow in a single direction, in other words, causing the spheres to become transformed into rods, so that they function as fibres in a reinforced composite material, thereby making it stronger in the direction of the rods.
The mechanical characteristics such as compressive resistance of a translucent concrete with epoxy matrix (bisphenol A) is up to 220 MPa. Moreover, it allows light to pass through without any distortion at all.

The mechanical characteristics such as compressive resistance of a translucent concrete with polycarbonate matrix is up to 202 MPa, as well as allowing light to pass through without any distortion at all. The good dispersion of the aggregates, additives and, above all, of the matrix, can be appreciated. The direction of the layers is parallel to the direction of the moulding. It has a laminar drying in the same direction in which it is cast. It displays good crystallisation in the highest parts, and decreases a little when approaching the lower end.

The manufacturing process of this concrete consists of the mixture of two processes, one where the cement is mixed with water, and the other where the matrices are mixed, whichever one, with the catalyst or hardener. The proportion of the latter must be at least 1.5 of matrix for each part of mortar. The mixing process can be manual or mechanical.
In accordance with the above description, it is possible to affirm that the light refraction characteristics, or translucidity, as well as the mechanical resistance to compression of the formulation of the translucent concrete of the present invention, have not been achieved by any other concrete, thereby meeting the optical and mechanical characteristics for calling it translucent concrete.

Other unique characteristics of the formulation of the concrete forming the object of this invention are that it can be used for structural purposes at the same time as being translucent; in other words it can be used in any kind of construction permitting colours, shapes and outlines to be seen through it.

The formulation of the concrete forming the object of this invention results in a concrete which, as well as being able to be used as an electrical conductor, is impermeable, having a volumetric weight of up to 35% less than that of a traditional concrete.

Having described the invention, we regard it as novel and therefore the content of the following claims is claimed as ours:

## Claims

1. Formulation for obtaining a translucent concrete mixture, comprising a mixture of epoxy and polycarbonate matrices, plus fibreglass, optical fibres, colloidal silica sol, silica and diethylenetriamine (DETA) and Portland cement.

2. Formulation for obtaining a translucent concrete mixture according to claim 1, wherein the content of the components is: epoxy matrix from 0% to 90%, and the polycarbonate matrix from 0% to 60%, fibreglass from 0% to 10%, colloidal silica sol from 0.5% to 5%, silica from 0.5% to 10%, diethylenetriamine (DETA) from 10% to 50%; optical fibres from 0% to 3% and Portland cement from 0% to 15%.

3. Formulation for obtaining a translucent concrete mixture according to claim 1, **characterised in that** when the concrete sets it presents the optical characteristic of translucidity, in other words it permits the passage of light through the set concrete, permitting colours, shapes and outlines to be seen through it.

4. Formulation for obtaining a translucent concrete mixture according to any of the above claims, **characterised by** having a resistance to compression that varies from 150 MPa up to 250 MPa.

5. Formulation for obtaining a translucent concrete mixture according to claim 1, **characterised by** having a maximum water absorption of 0.35%.

6. Formulation for obtaining a translucent concrete mixture according to claim 1, **characterised by** having a maximum oxygen index of 25%.

7. Formulation for obtaining a translucent concrete mixture according to claim 1, **characterised by** having a thermal conductivity of 0.21 W/m °C.

8. Formulation for obtaining a translucent concrete mixture according to any of the above claims, **characterised by** having an elastic limit greater than 60 MPa.

9. Formulation for obtaining a translucent concrete mixture according to any of the above claims, **characterised by** having a Young's Modulus from 2750 MPa to 3450 MPa.

10. Formulation for obtaining a translucent concrete mixture according to claim 1, which, from its characteristics and composition, can be a conductor of electricity, dispensing with interior wiring in any construction,

11. Formulation for obtaining a translucent concrete mixture according to claim 1, which, from its mechanical and optical characteristics, can be used for purposes that are both architectural and aesthetic, and also structural and under conditions of service equal to and even different from those of a traditional concrete.

12. A manufacturing process for translucent concrete according to claim 1, in which said process comprises the following stages: a) mixing the cement with water according to the proportions described in claim 2; b) mixing the polymer matrices with the respective catalyst or hardener; and c) mixing the previous two mixtures with the other components in the proportions described in claim 2.

13. The process of claim 12, in which the ratio of the polymer matrices and the mortar is at least 1.5:1, and the mixing is done manually or mechanically.

14. The process according to claim 12, in which the silica has been subjected to a low flow processing in a single direction, causing the spheres to be transformed into rods in such a manner that they function as fibres in a reinforced composite material, producing a greater force in the direction of the rods.
